# DEMANDE DE BREVET EUROPEEN

(11) **EP 1 634 731 A1**
(43) Date de publication de la demande: **15.03.2006**
(21) Numéro de dépôt: 05108227.9
(22) Date de dépôt: 08.09.2005
(51) Int. Cl.: B60G 7/00, B60G 21/055

(54) **Essieu à traverse déformable en torsion**

(30) Priorité: 10.09.2004 FR 0409643
(71) Demandeur: Auto Chassis International SNC, 72086 Le Mans Cédex 9 (FR)
(72) Inventeur: Dube, Emmanuel, 72220 Laigne en Belin (FR); Veneau, Jean, 72370 Ardenay sur Mérize (FR)
(74) Mandataire: Larcher, Dominique

(57) **Abrégé**

L'invention a pour objet un essieu souple pour véhicule automobile, comprenant une traverse torsible reliant deux bras longitudinaux, chacun desdits bras étant destiné à être relié audit châssis par une liaison pivotante au voisinage d'une première de ses extrémités sur le châssis dudit véhicule, un support de roue étant destiné à être monté au voisinage de l'autre extrémité desdits bras, dite deuxième extrémité, caractérisé en ce qu'il comprend des moyens de transfert d'efforts assurant le transfert directement audit châssis d'efforts transversaux s'exerçant sur lesdits bras longitudinaux (1), (2), lesdits moyens de transfert d'efforts s'étendant à partir de ladite liaison pivotante (11), (21), ou au voisinage de celle-ci, jusqu'à une zone desdits bras (1), (2) située entre ladite traverse (3) torsible et ladite deuxième extrémité desdits bras.

## Description

Le domaine de l'invention est celui des véhicules automobiles. Plus précisément, l'invention concerne les essieux souples pour les véhicules automobiles.

On rappelle qu'on désigne généralement par essieu souple un essieu conçu de façon à former un élément torsible entre deux roues.

Classiquement, un essieu souple comprend deux bras longitudinaux portant chacun un support de montage de roue et reliés par un élément de liaison transversale appelé traverse ou profil.

Les bras longitudinaux sont généralement associés à différents organes fonctionnels tels que notamment :
- des moyens supportant une extrémité de ressort de suspension, ces moyens supports étant désignés par le terme de coupelle de ressort (une telle coupelle présente le plus souvent une surface dans laquelle est formé un téton de centrage formant moyens de positionnement et/ou de maintien en position du ressort de suspension) ;
- des moyens coopérant avec des amortisseurs ;
- des douilles d'accouplement de l'essieu au châssis du véhicule, permettant le montage à pivotement des bras longitudinaux par rapport au châssis.

Au cours de la conception d'un essieu, deux grandeurs sont, entre autres, considérées pour apprécier la qualité de l'essieu : la flexion et la torsion.

Le concept, désormais répandu, des essieux souples consiste à concilier une forte raideur en flexion et une relative souplesse en torsion. En général, c'est par la géométrie de la section de la traverse, via ses inerties de flexion et de torsion, qu'est obtenu le compromis souhaité entre raideur en flexion et souplesse (relative) de torsion.

Cette technique des essieux souples s'est largement déployée dans les segments de gamme moyenne et inférieure de la construction automobile, grâce à de nombreux avantages.

D'abord l'architecture du bloc arrière très compact de ces segments de gamme, favorise le système d'essieu souple, avec seulement deux fixations latérales sur la caisse, et une ossature d'essieu en forme de H, avec deux bras longitudinaux reliés entre eux par une traverse.

En terme de prestation, cette technique est arrivée à un compromis acceptable combinant le filtrage longitudinal sur des percussions de roue, et le guidage transversal nécessaire à une bonne mise en virage du véhicule. Les inerties de flexion données aux bras ainsi qu'à la traverse ont été augmentées alors que les articulations élastiques se sont assouplies dans un plus grand volume, cela pour un meilleur confort vibro-acoustique.

En termes de structure, le centre élastique de l'essieu ou centre de pivotement instantané de l'essieu par rapport à la caisse, est situé au milieu des deux articulations élastiques, sur l'axe médian du véhicule. Il se déplace ensuite progressivement vers la butée latérale qui bloque le déplacement sous un effort de virage, par exemple. De fait, ces mouvements d'essieu ne parviennent pas à inverser la tendance du survirage sous effort transversal, ce qu'il faut réduire autant que faire se peut.

De plus, l'industrie sait aujourd'hui produire cette technologie avec une excellente fiabilité concernant la tenue, la performance et le coût de réalisation. Tous ces facteurs s'additionnent pour plébisciter une technologie qui procure un excellent rapport qualité/prix/prestations pour la demande du moment.

Dans les essieux souples en « H » composés de deux bras longitudinaux réunis par une traverse soudée aux bras, la structure d'essieu est reliée à la caisse en deux points avant équipés d'articulations élastiques. Ces articulations doivent assurer la performance de guidage de l'essieu sans générer trop de braquage (survireur) par les efforts axiaux et radiaux associés dans les sollicitations de virage.

Le compromis est difficile à trouver entre la capacité d'absorber les chocs longitudinaux par une faible raideur radiale (direction X véhicule) et un guidage minimisant les braquages sous efforts de virage (direction Y véhicule) nécessitant une grande raideur.

Des évolutions sont apparues dans l'obliquité de l'axe d'oscillation des articulations dans le but d'optimiser la combinaison des raideurs axiales et radiales.

Ce concept a cependant ses limites et ne permet pas d'obtenir, sur de fortes charges latérales en virage, l'effet de braquage vers la pince (effet sous-vireur) sur la roue en appui (extérieure virage).

De plus, dans le concept d'une telle structure, il est impossible d'obtenir des effets de pince au freinage. En effet, dans une sollicitation de freinage en ligne droite sur les deux roues (les efforts FX roue gauche sont les mêmes que les efforts FX roue droite), les articulations ne participent pas à la variation angulaire des plans de roue. On assiste à une simple déformation de l'essieu qui ne peut que fabriquer des effets d'ouverture sur les roues, préjudiciable à une bonne tenue de cap.

En freinage sur une roue (roue extérieure en virage par exemple), l'effet est encore plus nocif, car les deux effets survireurs s'ajoutent, celui de l'effort transversal, mentionné précédemment, et l'effet de freinage.

En pratique, les évolutions proposées pour améliorer les performances des essieux sont de deux types.

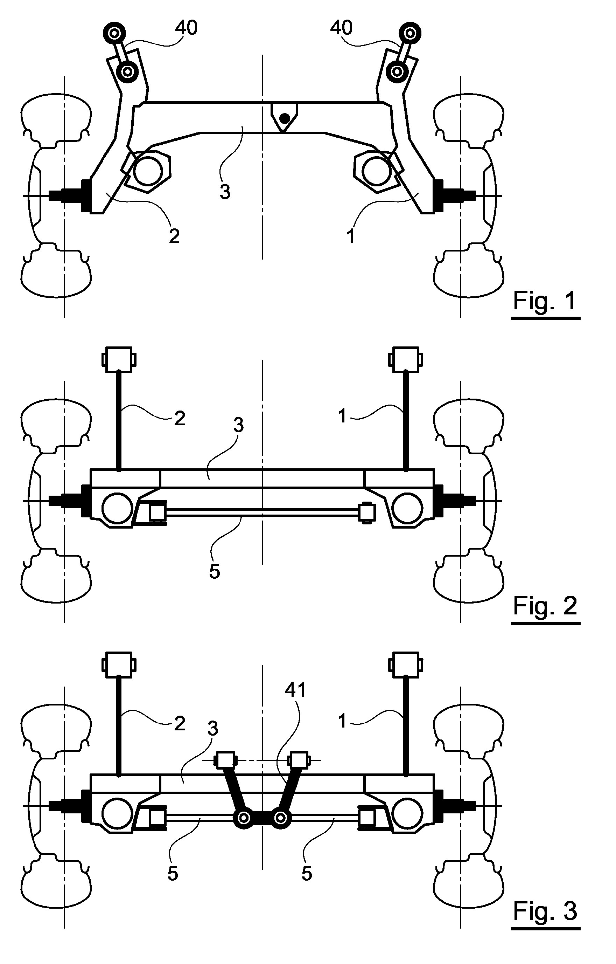

Selon une première technique, on modifie l'essieu en partie avant pour faire braquer l'essieu sous efforts. Pour cela, on ajoute en avant des articulations de l'essieu (comprenant deux bras 1, 2 reliés par une traverse 3), un dispositif de braquage en virage à l'aide de biellettes 40 articulées (figure 1). La convergence de ces mini-biellettes permet de rejeter le point de pivotement de l'essieu en arrière de l'axe d'essieu.

Avec des pièces très rigides, cette disposition permet d'atténuer le survirage.

Cependant, cette association ne permet pas de réduire la pince au freinage et rend la filtration longitudinale très difficile.

Une variante de cette première technique consiste en une modification interne des raideurs d'articulation par l'introduction au moulage des pièces, d'inserts métalliques en forme de cône. Ces cônes orientent la déformation selon une direction X en exploitant la déformation perpendiculaire en Y.

Cet effet n'est généralement pas du niveau demandé par les cahiers des charges et, de plus, ces pièces internes pénalisent beaucoup la tenue en endurance des pièces en caoutchouc.

Selon une deuxième technique, on modifie l'essieu en partie arrière par ajout d'une voie de passage supplémentaire : c'est la famille des essieux à guidage latéral par l'ajout de systèmes générant ou pas un phénomène de « tamis ». Les systèmes symétriques ne sont pas générateurs de ce phénomène car le mouvement vertical des roues n'entraîne pas de déplacement transversal de celles-ci. Le guidage supplémentaire par barre 5 Panhard (figure 2) imprime géométriquement cet effet de façon d'autant plus forte que la barre est courte et le débattement vertical important.

Selon la solution illustrée par la figure 3, la barre stabilisatrice 5 est reliée d'une part à l'extrémité arrière de l'essieu, derrière la traverse au niveau de l'axe de roue, et, d'autre part, à un bras de pivotement 41 de forme trapézoïdale (ou autre) relié à la caisse par un axe de rotation parallèle à l'axe de rotation de l'essieu. Une biellette supplémentaire est montée symétriquement à la barre stabilisatrice.

Une telle solution impose clairement d'augmenter le nombre de fixations du train arrière sur la caisse. Par conséquent, une telle solution peut, pour pouvoir s'intégrer dans certaines architectures de véhicules, remettre en cause la position et la forme des éléments environnants (réservoir à carburant, roue de secours, échappement...).

L'observation physique des solutions proposées fait apparaître aujourd'hui que la topologie d'essieu en H équipé de deux seules articulations a montré ses limites. L'essieu multi-bras composé de plusieurs bras latéraux et longitudinaux devient l'alternative idéale mais coûteuse en espace et en prix pour assurer le découplage longitudinal/transversal et obtenir les braquages sous efforts demandés.

En effet, dans la topologie « multi-bras » qui met en oeuvre, par définition, plusieurs solides articulés, les degrés de libertés de la roue par rapport à la caisse sont traités séparément puisque plusieurs bras régissent indépendamment les mouvements relatifs les uns des autres. Il devient plus aisé d'améliorer le « calage » du train arrière (on parle aussi d'appui) en courbe par une meilleure rigidité transversale sans déplacement associé (ballant), et d'augmenter la capacité du train à gommer les chocs sur obstacle, par un recul de la roue augmenté.

Dans ce cas, les organes de guidage transversaux sont repris sur un berceau support, fixé à la caisse par des plots filtrés. On comprendra aisément que le coût d'une telle installation est bien supérieur à celle d'un essieu souple en H équipé de ses paliers.

Parallèlement, depuis l'apparition de l'essieu souple au début des années 1970, plusieurs solutions ont été développées pour améliorer ses performances.

Les améliorations ont d'abord porté sur des articulations élastiques à l'interface train-caisse, transformées en cales autodirectionnelles : une pièce métallique, formant une sorte de coin, est intégrée dans le volume de caoutchouc de l'articulation.

Ainsi, sous une sollicitation de virages, l'effort axial exercé sur la cale oblige l'essieu à contrer son mouvement naturel de braquage dans le sens du survirage. Le déplacement Y (ou ballant) est alors utilisé pour réduire le déplacement en X de l'articulation.

Cette technique présente toutefois plusieurs inconvénients.

En premier lieu, l'endurance de l'articulation se satisfait assez peu du corps métallique étranger (formant le coin), celui-ci perturbant le fonctionnement élastique interne de l'articulation.

De plus, en termes de conception du système train, il est nécessaire de provoquer du ballant d'essieu pour contrer le survirage.

Or, cette souplesse transversale n'est pas souhaitée dans le comportement du véhicule pour la tenue en ligne de celui-ci. Une telle souplesse provoque en effet une dégradation de la tenue de cap, surtout en cas de vent latéral.

L'invention a notamment pour objectif de pallier les inconvénients de l'art antérieur.

Plus précisément, l'invention a pour objectif de proposer un essieu souple pour véhicule automobile qui présente, sous effort transversal, un comportement notablement amélioré par rapport aux essieux souples de l'art antérieur.

En ce sens, l'invention a également pour objectif de fournir un tel essieu souple qui permette de limiter les phénomènes de dérive et, par conséquent, de survirage.

L'invention a aussi pour objectif de fournir un tel essieu souple qui puisse s'intégrer dans la plupart des architectures de véhicules, sans remettre en cause la forme et/ou la position des organes environnants.

L'invention a aussi pour objectif de fournir un tel essieu souple qui permette d'envisager un meilleur comportement du véhicule vis-à-vis de chocs longitudinaux sur les roues en situation de virage, ceci comparé aux essieux souples de l'art antérieur.

Un autre objectif de l'invention est de fournir un tel essieu souple qui puisse être aisément adapté en fonction des architectures de châssis des véhicules.

Encore un autre objectif de l'invention est de fournir un tel essieu souple qui soit simple de conception et facile à mettre en oeuvre.

L'invention a encore pour objectif de fournir un tel essieu souple qui puisse être fabriqué aisément et de façon peu coûteuse.

Ces objectifs, ainsi que d'autres qui apparaîtront par la suite, sont atteints grâce à l'invention qui a pour objet un essieu souple pour véhicule automobile, comprenant une traverse torsible reliant deux bras longitudinaux, chacun desdits bras étant destiné à être relié audit châssis par une liaison pivotante au voisinage d'une première de ses extrémités sur le châssis dudit véhicule, un support de roue étant destiné à être monté au voisinage de l'autre extrémité desdits bras, dite deuxième extrémité, caractérisé en ce qu'il comprend des moyens de transfert d'efforts assurant le transfert directement audit châssis d'efforts transversaux s'exerçant sur lesdits bras longitudinaux, lesdits moyens de transfert d'efforts s'étendant à partir de ladite liaison pivotante, ou au voisinage de celle-ci, jusqu'à une zone desdits bras située entre ladite traverse torsible et ladite deuxième extrémité desdits bras.

De cette façon, on fait transiter une partie des contraintes due aux efforts transversaux s'exerçant sur les bras longitudinaux directement vers le châssis du véhicule.

Les contraintes ainsi transférées vers le châssis ne transitent donc pas par l'essieu et lui évitent de subir des perturbations de nature à engendrer la dérive du train.

En d'autres termes, l'invention permet, par l'intermédiaire des moyens de transfert d'effort, de créer une voie de passage de la roue vers le châssis du véhicule, sans passer par l'essieu, ceci pour les efforts transversaux s'exerçant sur les roues.

Ainsi, un essieu souple selon l'invention présente, sous effort transversal un comportement notablement amélioré par rapport aux essieux souples de l'art antérieur, notamment en ce qu'il permet de limiter les phénomènes de dérive et, par conséquent, de survirage, comme cela va apparaître plus clairement par la suite.

On note que l'invention prévoit que la liaison des moyens de transfert au châssis est réalisée au niveau de la liaison pivotante des bras longitudinaux sur le châssis.

Il n'est donc pas nécessaire pour la mise en oeuvre de l'invention, de mobiliser une autre zone du châssis pour créer la liaison en question, au risque d'être incompatible avec certaines architectures de châssis.

Selon une solution avantageuse, lesdits moyens de transfert d'effort présentent une architecture en X de façon que lesdits efforts transversaux sont transférés de façon croisée de ladite deuxième extrémité d'un desdits bras, ou au voisinage de celle-ci, vers ladite liaison pivotante.

On obtient ainsi une solution simple et efficace pour transférer les efforts transversaux des roues vers le châssis du véhicule.

De plus, du fait de la réduction des efforts en X induits par le virage, la raideur des articulations à ladite première extrémité des bras longitudinaux peut être diminuée. Ceci permet d'envisager un amortissement plus important au niveau de ces articulations, au profit d'une meilleure prestation lors de chocs longitudinaux encaissés par les roues lorsque le véhicule est en virage.

En effet, le recul de roues peut, grâce à l'invention, augmenter sans dégrader la mise en virage du véhicule.

Selon une solution préférée, lesdits moyens de transfert présentent au niveau de l'intersection dudit « X », au moins une articulation permettant à ladite intersection un débattement vertical.

De cette façon, le découplage transversal/longitudinal des efforts est obtenu par les moyens de transfert d'efforts comme cela va apparaître plus clairement par la suite.

Dans ce cas, lesdits moyens de transfert comprennent préférentiellement, pour chacun desdits bras, au moins un poussant monté articulé à l'une de ses extrémités sur ledit bras et à l'autre de ses extrémités sur un élément monté à pivotement, au voisinage de ladite liaison pivotante, autour d'un axe coaxial à celui de ladite liaison pivotante.

Les moyens de transfert prennent ainsi appui sur l'élément pivotant qui permet, dans un mouvement de déplacement vertical symétrique des roues, de conserver la géométrie en pompage de l'essieu, celle-ci étant assurée par les angles de pince et de carrossage initiaux.

Dans le cas inverse, c'est-à-dire en débattement asymétrique de type dévers des roues, le mouvement de l'élément pivotant tend à accompagner la cinématique de dévers.

Selon une solution avantageuse, l'essieu comprend des moyens de limitation dudit débattement de ladite intersection.

Une telle caractéristique contribue à optimiser la reprise des efforts en Y, de façon à les transmettre au châssis du véhicule.

Préférentiellement, lesdits moyens de limitation sont conçus pour autoriser tout autre degré de liberté que celui correspondant audit débattement vertical.

On autorise de cette façon des mouvements relatifs des organes entre eux, tout en assurant la limitation du débattement de l'élément pivotant.

Dans ce cas, lesdits moyens de limitation comprennent préférentiellement une articulation élastique.

Ce type d'organe assure de façon simple la liaison mécanique souhaitée et procure un degré d'amortissement dû à son élasticité.

Avantageusement, lesdits moyens de limitation s'étendent entre ledit élément pivotant et ladite traverse.

Ainsi, les moyens de limitation sont mis en oeuvre efficacement sans nécessiter d'aménagement complexe dans l'architecture du châssis.

Selon un mode de réalisation préféré, lesdits moyens de limitation comprennent une pièce élastique montée dans un logement prévu sur ladite traverse.

Selon une solution préférée, lesdits poussants sont articulés sur un élément pivotant commun.

On simplifie de cette façon la gamme de montage d'un essieu selon l'invention, ce qui tend à limiter le coût de revient de l'essieu.

Dans ce cas, ledit élément pivotant présente préférentiellement une platine recevant lesdits poussants, et deux jambes s'étendant à partir de ladite platine jusqu'à ladite liaison pivotante.

Avantageusement, lesdits moyens de limitation agissent sur ladite platine.

Selon une autre caractéristique, lesdits poussants sont reliés audit ou auxdits éléments pivotants au voisinage de l'axe longitudinal dudit véhicule.

Avantageusement, lesdits poussants sont reliés audit ou auxdits éléments pivotants et auxdits bras par une liaison de type rotule obtenue à l'aide d'un organe élastique.

Tel que déjà mentionné en référence aux moyens de limitation du débattement de l'élément pivotant, un tel organe élastique permet d'assurer la liaison (ici pivotante) tout en procurant un degré d'amortissement dû à son élasticité.

L'invention concerne également un véhicule automobile équipé d'un essieu souple comprenant une traverse torsible reliant deux bras longitudinaux, chacun desdits bras étant destiné à être relié audit châssis par une liaison pivotante au voisinage d'une première de ses extrémités sur le châssis dudit véhicule, un support de roue étant destiné à être monté au voisinage de l'autre extrémité desdits bras, dite deuxième extrémité, caractérisé en ce que ledit essieu comprend des moyens de transfert d'efforts assurant le transfert directement audit châssis d'efforts transversaux s'exerçant sur lesdits bras longitudinaux, lesdits moyens de transfert d'efforts s'étendant à partir de ladite liaison pivotante, ou au voisinage de celle-ci, jusqu'à une zone desdits bras située entre ladite traverse torsible et ladite deuxième extrémité desdits bras.

D'autres caractéristiques et avantages de l'invention apparaîtront plus clairement à la lecture d'un mode de réalisation préférentiel de l'invention, donné à titre d'exemple illustratif et non limitatif, et des dessins annexés parmi lesquels :
- les figures 1 à 3 sont des vues schématiques d'essieux souples selon l'art antérieur ;
- les figures 4 et 5 son des vues, respectivement de dessus et de derrière, d'un essieu souple selon l'invention ;
- les figures 6 et 7 sont des vues respectivement de dessus et en coupe longitudinale d'une articulation destinée à équiper un essieu souple selon l'invention.

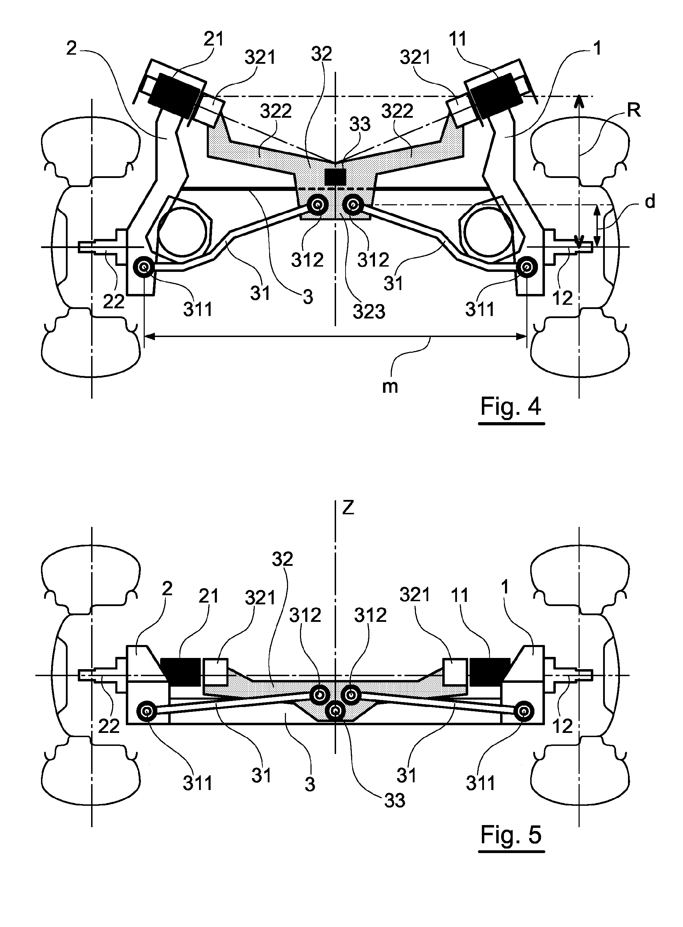

En référence à la figure 4, l'invention s'applique aux essieux souples en forme de H comprenant deux bras longitudinaux 1, 2, reliés entre eux par une traverse torsible 3.

Les bras longitudinaux présentent une première extrémité reliée chacune par une articulation élastique 11, 21 au châssis du véhicule, une deuxième extrémité sur laquelle est monté un porte-fusée 12, 22, ce dernier formant moyen support de roues.

Tel que déjà mentionné précédemment, le principe de l'invention réside dans le fait de prévoir une voie de passage pour les efforts transversaux s'exerçant sur les roues, cette voie s'étendant entre chaque roue et le châssis du véhicule, sans passer par l'essieu, la liaison avec le châssis étant prévue au niveau des articulations des bras avec le châssis.

Tel que cela apparaît, on prévoit de monter des moyens de transfert des efforts transversaux de façon que ces moyens de transfert s'étendent entre la caisse, au niveau des articulations 11, 21, et la deuxième extrémité des bras longitudinaux 1, 2 (celle au voisinage de laquelle est monté le porte-fusée 12, 22), ou au voisinage de celle-ci.

Selon le présent mode de réalisation, ces moyens de transfert comprennent deux éléments tubulaire de type bielle 31 et formant chacun un poussant.

Les poussants 31 sont montés à l'aide d'une liaison 311 sur les bras longitudinaux 1, 2, les liaisons 311 étant du type rotule.

A leur autre extrémité, les poussants sont couplés à un élément (qui va être explicité plus en détail par la suite) par l'intermédiaire d'une liaison rotule 312.

Selon une solution préférée, l'élément auquel les poussants 31 sont couplés se présente sous la forme d'un balancier 32 monté mobile à rotation au niveau des articulations 11, 21, par l'intermédiaire de paliers 321. Clairement, l'axe de rotation du balancier est coaxial avec l'axe de rotation des articulations 11,21.

Tel que cela apparaît, le balancier 32 présente deux jambes 322 portant chacun un palier 321.

On note que les montages des poussants 31 sur la platine 323 est réalisé au voisinage de l'axe longitudinal de l'axe longitudinal du véhicule.

Ainsi constitué, les moyens de transfert d'efforts transversaux présentent une architecture générale en X, l'intersection de ce X correspondant à la platine 323 sur laquelle sont couplés les poussants de façon articulée et autorisent un débattement vertical du balancier 32.

Selon une autre caractéristique, des moyens de limitation 33 du débattement du balancier 32 sont prévus.

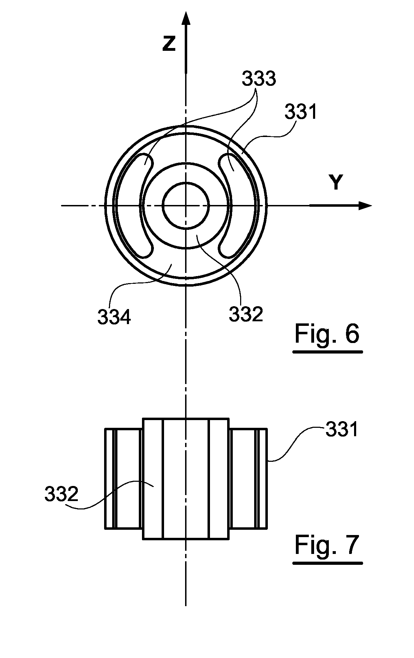

Ces moyens de limitation sont illustrés par les figures 6 et 7.

Tel qu'illustré, ces moyens de limitation 33 comprennent une articulation élastique conçue pour autoriser tout autre degré de liberté que celui correspondant au débattement vertical du balancier 32 (la course de celui-ci autour de l'axe des paliers 321 étant réduite à quelques millimètres).

Tel que cela apparaît, l'articulation selon le présent mode de réalisation comprend une bague extérieure 331 et une bague intérieure 332 reliées par une partie en caoutchouc adhérisée 334.

Cette partie en caoutchouc adhérisée 334 présente des alvéoles 333 positionnées et orientées de façon à réduire la raideur de translation dans la direction Y, cette raideur pouvant être très faible (par exemple inférieure à 150 N/mm).

En revanche, la partie en caoutchouc 334 confère une raideur très importante dans la direction Z, de l'ordre de 3 000 N/mm.

Une telle articulation a donc pour vocation le blocage du mouvement vertical entre la traverse et le balancier.

On note qu'une telle articulation permet des raideurs en torsion très faibles, ce qui est recherché dans le cas présent.

Cette articulation élastique s'étend entre la traverse 3 et la platine du balancier 32, en étant logée dans un évidement de la traverse prévu à cet effet.

Grâce à l'essieu selon l'invention qui vient être décrit, la composante résultante en X des efforts transmis au niveau des articulations avant 11, 21 peut être divisée par trois environ (en fonction du positionnement relatif du balancier et des poussants) comparé à un essieu souple de l'art antérieur. Ceci est notamment remarquable en ce qui concerne le rapport R/d). Le phénomène de dérive, et par là le survirage (dérive arrière supérieure à la dérive avant), s'en trouve fortement diminué, à proportion des braquages induits par les efforts.

La cinématique sous effort de l'ensemble qui vient d'être décrit est la suivante.

Dans un mouvement de déplacement vertical symétrique des roues, la traverse pivote autour de l'axe passant par les articulations 11, 21, provoquant le déplacement des bras 1, 2.

En débattement asymétrique (de type dévers) des roues, la distance m entre les extrémités des poussants 31 (du côté des bras) augmente du fait de la présence de la traverse 3 incompressible dans le sens Y. Par conséquent, les poussants ayant une longueur fixe transmette une poussée au balancier 32. La rotation de celui-ci est limité par les moyens de limitation 33 décrits précédemment et les efforts sont transmis, de façon croisée, des articulations 311 d'un bras vers les articulations 11, 21 de l'autre bras.

Par ailleurs, on note que les liaisons pivotantes entre les poussants et les bras, et entre les poussants et le balancier, peuvent mettre en oeuvre un organe élastique.

## Revendications

1. Essieu souple pour véhicule automobile, comprenant une traverse (3) torsible reliant deux bras longitudinaux (1), (2), chacun desdits bras étant destiné à être relié audit châssis par une liaison pivotante (11), (21) au voisinage d'une première de ses extrémités sur le châssis dudit véhicule, un support de roue (12) (22) étant destiné à être monté au voisinage de l'autre extrémité desdits bras, dite deuxième extrémité,
**caractérisé en ce qu'**il comprend des moyens de transfert d'efforts assurant le transfert directement audit châssis d'efforts transversaux s'exerçant sur lesdits bras longitudinaux (1), (2), lesdits moyens de transfert d'efforts s'étendant à partir de ladite liaison pivotante (11), (21), ou au voisinage de celle-ci, jusqu'à une zone desdits bras (1), (2) située entre ladite traverse (3) torsible et ladite deuxième extrémité desdits bras.

2. Essieu souple selon la revendication 1, **caractérisé en ce que** lesdits moyens de transfert d'effort présentent une architecture en X de façon que lesdits efforts transversaux sont transférés de façon croisée de ladite deuxième extrémité d'un desdits bras (1), (2), ou au voisinage de celle-ci, vers ladite liaison pivotante (11),(21).

3. Essieu souple selon la revendication 2, **caractérisé en ce que** lesdits moyens de transfert présentent au niveau de l'intersection dudit « X », au moins une articulation (312) permettant à ladite intersection un débattement vertical.

4. Essieu souple selon l'une quelconque des revendications 1 à 3, **caractérisé en ce que** lesdits moyens de transfert comprennent, pour chacun desdits bras (1), (2), au moins un poussant (31) monté articulé à l'une de ses extrémités sur ledit bras et à l'autre de ses extrémités sur un élément (32) monté à pivotement, au voisinage de ladite liaison pivotante (11), (21), autour d'un axe coaxial à celui de ladite liaison pivotante.

5. Essieu souple selon l'une des revendications 3 et 4, **caractérisé en ce qu'**il comprend des moyens de limitation (33) dudit débattement de ladite intersection.

6. Essieu souple selon la revendication 5, **caractérisé en ce que** lesdits moyens de limitation (33) sont conçus pour autoriser tout autre degré de liberté que celui correspondant audit débattement vertical.

7. Essieu souple selon l'une des revendications 5 et 6, **caractérisé en ce que** lesdits moyens de limitation (33) comprennent une articulation élastique.

8. Essieu souple selon l'une quelconque des revendications 5 à 7, **caractérisé en ce que** lesdits moyens de limitation (33) s'étendent entre ledit élément pivotant (32) et ladite traverse (3).

9. Essieu souple selon l'une des revendications 7 et 8, **caractérisé en ce que** lesdits moyens de limitation (33) comprennent une pièce élastique montée dans un logement prévu sur ladite traverse (3).

10. Essieu souple selon l'une quelconque des revendications 4 à 9, **caractérisé en ce que** lesdits poussants (31) sont articulés sur un élément pivotant (32) commun.

11. Essieu souple selon la revendication 10, **caractérisé en ce que** ledit élément pivotant (32) présente une platine (323) recevant lesdits poussants, (31) et deux jambes (322) s'étendant à partir de ladite platine (323) jusqu'à ladite liaison pivotante (11), (21).

12. Essieu souple selon les revendications 5 et 11, **caractérisé en ce que** lesdits moyens de limitation (33) agissent sur ladite platine (323).

13. Essieu souple selon l'une quelconque des revendications 4 à 12,
**caractérisé en ce que** lesdits poussants (31) sont reliés audit ou auxdits éléments pivotants (32) au voisinage de l'axe longitudinal dudit véhicule.

14. Essieu souple selon l'une quelconque des revendications 4 à 13,
**caractérisé en ce que** lesdits poussants (31) sont reliés audit ou auxdits éléments pivotants (32) et auxdits bras (1), (2) par une liaison de type rotule obtenue à l'aide d'un organe élastique.

15. Véhicule automobile équipé d'un essieu souple comprenant une traverse (3) torsible reliant deux bras longitudinaux (1), (2), chacun desdits bras étant destiné à être relié audit châssis par une liaison pivotante (11), (21) au voisinage d'une première de ses extrémités sur le châssis dudit véhicule, un support de roue (12), (22) étant destiné à être monté au voisinage de l'autre extrémité desdits bras, dite deuxième extrémité,
**caractérisé en ce que** ledit essieu comprend des moyens de transfert d'efforts assurant le transfert directement audit châssis d'efforts transversaux s'exerçant sur lesdits bras longitudinaux (1), (2), lesdits moyens de transfert d'efforts s'étendant à partir de ladite liaison pivotante (11), (21), ou au voisinage de celle-ci, jusqu'à une zone desdits bras (1), (2) située entre ladite traverse (3) torsible et ladite deuxième extrémité desdits bras.
